# EUROPÄISCHE PATENTSCHRIFT

(11) **EP 1 082 273 B1**
(45) Veröffentlichungstag und Bekanntmachung des Hinweises auf die Patenterteilung: **27.11.2002**
(21) Anmeldenummer: 99916803.2
(22) Anmeldetag: 19.03.1999
(51) Int. Cl.: C04B 20/00, B01F 3/18

(54) **MEHRKOMPONENTIGES BINDEMITTEL UND VERFAHREN UND VORRICHTUNG ZU SEINER VERARBEITUNG**
MULTIPLE-COMPONENT BINDER AND METHOD AND DEVICE FOR PRODUCING THE SAME
LIANT A PLUSIEURS COMPOSANTS, ET PROCEDE ET DISPOSITIF POUR SA MISE EN OEUVRE

(30) Priorität: 21.03.1998 DE 29805198 U
(43) Veröffentlichungstag der Anmeldung: 14.03.2001
(73) Patentinhaber: Fauner, Gerhard, 82166 Lochham (DE); Wendker, Hasso, 45657 Recklinghausen (DE)
(72) Erfinder: Fauner, Gerhard, 82166 Lochham (DE); Wendker, Hasso, 45657 Recklinghausen (DE)
(74) Vertreter: KOHLER SCHMID + PARTNER
(86) Internationale Anmeldenummer: DE9900775
(87) Internationale Veröffentlichungsnummer: WO99048832

(56) Entgegenhaltungen:
- EP-A- 0 519 155
- CH-A- 588 296
- DE-A- 2 423 419
- DE-A- 19 506 879
- FR-A- 2 355 556
- GB-A- 1 332 539
- US-A- 4 006 479
- US-A- 4 340 512
- US-A- 5 192 361

## Beschreibung

Die Erfindung betrifft ein Verfahren zur Verarbeitung eines mehrkomponentigen Bindemittels, bei dem mindestens eine Komponente vor der Verarbeitung in nanofeiner Form mit mittlerer Partikelgröße < 1 µm vorliegt.

Mörtel und Zemente mit den eingangs beschriebenen Merkmalen sind in der EP 0 519 155 A2 oder der DE 195 06 879 A1 beschrieben.

Mehrkomponentige Mörtel als solche sind beispielsweise bekannt aus der DIN 18 156 vom April 1977.

Mehrkomponentiger Zement ist beispielsweise bekannt aus der DIN 1164. Daraus hergestellte Bauteile, beispielsweise Glasfaserbeton-Wellplatten ("FBK-Wellplatten") sind ebenfalls aus zahlreichen, öffentlich zugänglichen Zulassungsbescheiden des Deutschen Instituts für Bautechnik in Berlin bekannt; insbesondere sind die zur Herstellung derartiger Bauteile verwendeten Materialien und ihre Mischungen mit allen Angaben der Rezepturen einsehbar beim Deutschen Institut für Bautechnik hinterlegt.

Klebstoffe sind beispielsweise ausführlich beschrieben in dem Lehrbuch von Fauner und Endlich "Angewandte Klebtechnik", Carl Hanser Verlag, München Wien, 1979, insbesondere S.39 ff.

In der Literatur wird zwischen organischen und anorganischen Klebstoffen unterschieden. Zwitterstrukturen aus Mischungen oder/und chemischen Mischverbindungen sind möglich. Die Verfestigung von Klebstoffen kann, je nach System, physikalisch oder durch chemische Härtung erfolgen:

Zur physikalischen Verfestigung wird die Ausgangsstruktur der Moleküle grundsätzlich nicht mehr verändert, sondern Schmelzverfahren bzw. die Lösungsmittelabgabe angewendet. Deshalb kommt es hierbei nicht zu Molekülvernetzungen. Daraus resultieren im allgemeinen geringere Festigkeit und Wärmebeständigkeit, jedoch ausgeprägtere Kriechneigung.

Die chemische Härtung zielt hauptsächlich auf eine Molekülvergrößerung und -vernetzung hin und erfordert deshalb eine chemische Reaktion in der Klebschicht. Sie wird entweder durch Energiezufuhr im Form von Wärme, Strahlung, Licht oder Ultraschall und/oder durch das Zusammenführen von wenigstens zwei reaktiven Komponenten ausgelöst.

Eine solche chemische Aushärtung erfolgt beispielsweise nicht bei einem aus der US 4,006,479 A bekannten Verfahren zum Dispergieren von metallischen Partikeln in einem dielektrischen Bindermaterial, insbesondere einem organischen Harzbinder. Nach dem bekannten Verfahren sollen feingemahlene Metallpartikel in einem pulverförmigen dielektrischen Material, in der Regel Silikondioxid, mit dem organischen Bindematerial vermengt werden und nach dem Auftragen auf Oberflächen radar-absorbierende Eigenschaften entfalten. Es handelt sich hierbei also nicht um einen Mörtel oder Zement im Sinne der eingangs beschriebenen Art.

Ebenso ist eine chemische Härtung bei einem Verfahren nach der US 4,340,512 A nicht vorgesehen, mit dem Phosphor-Suspensionen für die Beschichtung von Leuchtstofflampen zubereitet werden sollen, wobei ein temporäres organisches Bindemittel einen kurzzeitigen Halt der Suspension während der Beschichtung, nicht aber eine dauerhafte chemische Verfestigung bewirken soll. Zwar ist in dem Verfahren auch die Zugabe eines anorganischen Binders, insbesondere Al₂O₃ in Submikrongröße als stabile anionische Suspension vorgesehen, jedoch sollen diese Nanopartikel offenbar nicht mit irgendwelchen Reaktionspartnern chemische Bindungen eingehen, die eine chemische Aushärtung bzw. Verfestigung bewirken würde.

Ebenfalls nur eine physikalische Heißverfestigung bzw. Trocknung und keinesfalls eine chemische Aushärtung ist bei einem Stoffgemisch nach der GB 1 332 539 A vorgesehen, in der beschrieben ist, daß Asbestfasern mit einem Bindemittel vermischt werden sollen, welches fein verteilte Silikate in Submikrongrößen, Kalk sowie Bentonit-Ton aufweist. Ein Reaktionspartner für die Nanopartikel ist auch hier nicht vorgesehen. Im übrigen handelt es sich bei dem bekannten Stoffgemisch auch nicht um einen Mörtel, Zement oder klebenden Stoff im Sinne des eingangs beschriebenen mehrkomponentigen Bindemittels.

Organische Klebstoffe haben eine sehr begrenzte Wärmebeständigkeit, die ihre Anwedung z.B. im Maschinenbau und im Bauwesen oft einschränkt. Sie reicht bei handelsüblichen bis hochfesten Strukturklebstoffen bis ca. 200 °C, bei den chemisch nicht eindeutig zuzuordnenden Silikon-Klebstoffen bis 330 °C und bei Polyimidklebstoffen und deren Abkömmlingen bis ca. 400 °C. Höhere Anforderungen bis über 1000 °C werden zwar von anorganischen Klebstoffen und Bindemitteln erfüllt, jedoch scheitert deren Anwendung oft an der Sprödigkeit. Deshalb sind sie kaum in der Lage, größere Dehnunterschiede zwischen den zu verbindenden Bauteilen auszugleichen und halten Schwingbeanspruchungen und betriebsbedingten Verformungen weniger stand.

Ein organisches Harzgemisch mit Submikron-Partikeln auf Lignin-Basis ist bekannt aus der US 5,192,361 A. Als Mörtel oder Zement eignet sich dieses Harzgemisch jedoch nicht.

Auch ist keine anorganische Nanokomponente entsprechend dem eingangs beschriebenen Bindemittel vorgesehen.

Insgesamt zeichnen sich anorganische nichtmetallische Bindemittel und Baustoffe wie Keramik, Zement und Glas allgemein durch geringe Flexibilität und hohe Sprödigkeit aus. Dadurch stößt ihre Verwendbarkeit trotz positiver Eigenschaften wie Hitzebeständigkeit, Unbrennbarkeit, große Härte und chemische Beständigkeit dort an ihre Grenzen, wo es zusätzlich um Schwingfestigkeit, Wärmedehnung und einsatzbedingte Verformungen geht.

Die Fortschritte in der Entwicklung nanofein strukturierter Materialien ermöglichen neuerdings auch die Herstellung anorganischer nichtmetallischer Bindemittel und Baustoffe mit gezielt beeinflußten Anwendungseigenschaften, wie erhöhter Flexibilität, veränderter Dichte und damit auch der Permeabilität unter Beibehaltung der positiven Grundeigenschaften.

Aus der oben zitierten EP 0 519 155 A2 ist ein Zusatzmittel für Spritzbeton und -mörtel bekannt, das ein Kieselsäuresol mit einer Partikelgröße im Bereich von 7 bis 50 nm aufweisen soll. Reaktionspartner für diese Nanopartikel sind jedoch bei dem bekannten Beton oder Mörtel nicht vorgesehen, so daß zwar ein chemisches Aushärten des Mörtels oder Betons in der üblichen Weise erfolgt, an der jedoch die nanofein strukturierten Materialien keinen Anteil haben.

Das gleiche gilt für einen faserverstärkten mineralischen Baustoff gemäß der DE 195 06 879 A1, bei dem ebenfalls Nanosilikate mit einer mittleren Teilchengröße < 0,1 µm eingesetzt werden sollen, die zwar eine Eigenschaftsverbesserung des damit erhaltenen Zements oder Betons bewirken sollen, aber ebenfalls keine Reaktionspartner im Bindemittel vorfinden. An der chemischen Aushärtung haben die Nanopartikel keinen Anteil; lediglich der ausgeprägte wasserbindende Effekt von Nanosilika wird zur Verbesserung des rheologischen Verhaltens im Hinblick auf eine plastfizierende Wirkung ausgenutzt.

Wenn es gelingt, das anorganische Bindemittel der Verarbeitung besonders fein zuzuführen, so erfolgt bei der chemischen Härtung der Zusammenschluß besonders feiner Partikel mit einer größeren Anzahl von Verbindungsstellen, die bei entsprechender Prozess-Steuerung als Gelenke zu erhöhter Flexbilität beitragen. Auch der energetische Oberflächenzustand vieler kleiner Partikel und die resultierende Gesamtstruktur kann vorteilhaft genützt werden. Darüber hinaus ermöglicht ein feinkörniges Gefüge auch eine Verarbeitung in dünneren Schichten, verbunden mit Klebstoffeinsparung, schnellerer und besserer Durchhärtung und rascherem Temperaturausgleich bei thermischer Betriebsbeanspruchung.

Weiterhin ergibt sich auch eine höhere Flexibilität bei Wärmedehnung und ein besseres Verhalten bei Schwingbeanspruchung sowie eine höhere einsatzbedingte Verformbarkeit bei Werkstücken unter Verwendung des erfindungsgemäßen Bindemittels. Es ist daher insbesondere im Baubereich mit besonderem Vorteil einzusetzen, wo besonders hohe Ansprüche an die Festigkeits- und Dehnungseigenschaften der verwendeten Materialien gestellt werden. Durch eine vermehrte Stegbildung zum Substrat aufgrund der verwendeten nanofeinen Partikel im Bindemittel ergibt sich insbesondere bei Adhäsionsvorgängen ein besonders günstiges Verhalten.

Weiterhin kann durch den Zusatz einer mikro- oder nanofeinen Komponente nach Verarbeitung des erfindungsgemäßen Bindemittels die Ausbreitung der bei hoher Beanspruchung entstehenden Risse gestoppt oder zumindest verlangsamt werden, weil die Wahrscheinlichkeit, daß der Riß auf einen den Weiterreißvorgang stoppendes Teilchen trifft, mit abnehmender Teilchengröße und daher "höherer Präsenz" der Teilchen erhöht wird. Die positiven Folgen davon sind steigende Festigkeit und Flexibilität der Endprodukte.

Die obengenannten Vorteile gelten prinzipiell für alle möglichen Arten von mehrkomponentigen Bindemitteln, also Kleber, Mörtel, Zement, Keramik, Dichtstoffe und anorganische Gläser etc.

Die oben zitierten Dokumente offenbaren den Zusatz nanofeiner Partikel zu Bindemitteln, seien diese metallischer/oxidischer oder organischer Natur.

In den Dokumenten CH 588 296 A, DE 24 23 419 A und FR-A-2 355 556 sind Vorrichtungen zur Herstellung von Bindemitteln beschrieben.

Keines der genannten Dokumente berichtet jedoch im Detail von Problemen und insbesondere nicht von deren Lösung, die bei der Verarbeitung nanofeiner Materialien auftreten.

In vielen Fällen gewerblicher und industrieller Anwendung der oben vorgestellten neuen Werkstofftechnologie im Bauwesen, speziell im Fassadenbau, muß das benötigte Material bzw. Bindemittel erst bei der Herstellung z.B. von Fassadenplatten oder im Moment der Montage an der Baustelle aus mikro- bzw. nanofeinen Komponenten und gegebenenfalls erforderlichen Reaktionszusätzen wie Härtern gemischt und anschließend sofort verarbeitet werden.

Eine Verarbeitung der nanofeinen Stoffe auf herkömmliche Art ist grundsätzlich nicht möglich, da dies in den meisten Fällen schon bei Luftkontakt und Raumtemperatur zu chemischen Veränderungen und Zusammenklumpungen führt, wodurch die beabsichtigte Wirkung der besonders feinen stofflichen Bestandteile im Gesamtverbund eingeschränkt oder sogar ganz unterbunden wird.

Aufgabe der Erfindung ist daher, ein Verfahren vorzustellen, mit dessen Hilfe von Hand oder maschinell nanofein strukturierte anorganische Bindemittel und Baustoffe mit ebenso feinen Zusätzen aus metallischen oder nicht-metallischen Stoffen gemischt, sodann mit gasförmigen, flüssigen oder festen Härtern versetzt und anschließend weiterverarbeitet werden können. Zur Erzielung spezieller Effekte können noch weitere Zusätze in allen möglichen Aggregatzuständen beigemischt werden.

Erfindungsgemäß wird diese Aufgabe dadurch gelöst, daß die nanofeine Komponente bis zur Verarbeitung des Bindemittels in einer Vakuumverpackung bevorratet gehalten und erst unmittelbar bei der Verarbeitung des Bindemittels aus der Vakuumverpackung entnommen wird.

Das Abhalten von Stoffen aus der Atmosphäre dürfte eine der einfachsten und wirksamsten Methoden zur Verhinderung einer vorzeitigen und unerwünschten Reaktion der nanofeinen Komponente darstellen. Funktionsbeeinträchtigungen, wie beispielsweise unerwünschte Agglomeration der Nanoteilchen oder gar ihre chemische Veränderung können damit zumindest eingeschränkt oder ganz unterbunden werden.

Bei einer besonders bevorzugten Variante dieses Verfahrens wird eine Vakuumverpackung verwendet, die für einen großen Bereich des elektromagnetischen Spektrums, insbesondere im Bereich des sichtbaren Lichts und der UV-Strahlung abschirmend wirkt. Auf diese Weise wird eine vorzeitige Reaktion der nanofeinen Komponente und/oder anderer Komponenten durch Zufuhr von Strahlungsenergie abgeblockt. Dies ist insbesondere dann vorteilhaft, wenn die Abschirmung bei bestimmten Wellenlängen wirksam ist, bei denen (wie bei bekannten Klebstoffen teilweise üblich) unter Bestrahlung eine Reaktion ausgelöst wird.

Besonders bevorzugt ist auch ein Verfahren zur Verarbeitung eines mehrkomponentigen Bindemittels, bei dem die nanofeine Komponente bis zur Verarbeitung des Bindemittels in einem Trägermedium eingebettet bevorratet gehalten und erst unmittelbar bei der Verarbeitung des Bindemittels vom Trägermedium getrennt wird.

Zum Zeitpunkt der Applikation wird dem Trägermedium (mit darin eingebetteter nanofeiner Komponente) ein Reaktionspartner bzw. Katalysator oder Beschleuniger zugeführt. Eventuell ist zusätzlich die Zufuhr von Energie zur Einleitung einer Reaktion erforderlich. Das Trägermedium wirkt zunächst als Puffer zwischen den Reaktionszentren. Es kommt zu Reaktionen in feinsten räumlichen Teilbereichen nach Art der Perl-, Lösungsmittel- oder Dispersions-Emulsions-Polymerisation, Spätestens nach Aufbringen des in Härtung bzw. Festigung befindlichen Bindemittels wird das Trägermedium, beispielsweise durch Verdunsten oder Verdampfen, entfernt.

Besonders bevorzugt ist auch ein Verfahren zur Verarbeitung eines mehrkomponentigen Bindemittels, bei dem die nanofeine Komponente bis zur Verarbeitung des Bindemittels in einem Temperaturbereich ≤ 10°C gehalten wird. Durch die Unterkühlung werden unerwünschte Reaktionen verhindert oder zumindest bis zum Abschluß der Applikation verzögert.

Bei einer besonders bevorzugten Verfahrensvariante wird die nanofeine Komponente bis zur Verarbeitung des Bindemittel in einem speziell dafür vorgesehenen Kühlbehälter gelagert, der entsprechend auf die Bedürfnisse beim jeweiligen Applikationszweck angepaßt sein kann.

Vorzugsweise wird die nanofeine Komponente zunächst mit chemisch nicht mit der nanofeinen Komponente reagierenden Zusätzen und erst danach mit dem Reaktionspartner und/oder dem Reaktionsbeschleuniger oder Katalysator vermischt. Dadurch kann der in der Regel relativ kurze Zeitraum, der für die Aushärtung bzw. Verfestigung zur Verfügung steht, ganz an das Ende des Verarbeitungsverfahrens gelegt und damit optimal ausgenutzt werden.

Bei einer Weiterbildung dieser Verfahrensvariante werden alle Komponenten und Zusätze des Bindemittels in einer einzigen Mischkammer vermischt, so daß hinsichtlich der Verarbeitungsvorrichtung ein besonders geringer apparativer Aufwand entsteht.

Alternativ dazu kann bei einer anderen, bevorzugten Verfahrensvariante die nanofeine Komponente zunächst in einer ersten Mischkammer mit chemisch neutralen Zusätzen vorgemischt und anschließend in einer zweiten Mischkammer mit dem Reaktionspartner und/oder dem Reaktionsbeschleuniger oder Katalysator vermischt werden. Damit wird sichergestellt, daß in der ersten Mischkammer ohne Beeinflussung durch den Reaktionspartner eine homogene Mischung aus den nanofeinen Komponenten und weiteren Zusätzen erzeugt werden kann. Wenn die erste Mischkammer nur mit Komponenten beschickt wird, die nicht miteinander reagieren, so erfolgt hier nur eine rein physikalische Vormischung, die keine klebrigen Rückstände erzeugt, welche nach Ende des Verarbeitungsverfahrens entfernt werden müßten.

Bei einer weiteren bevorzugten Verfahrensvariante schließlich wird bei der Verarbeitung des mehrkomponentigen Bindemittels die nanofeine Komponente in einem Wirbelkammerverfahren unter Ausnutzung eines Druckgradienten mit einem Reaktionspartner und/oder einem Reaktionsbeschleuniger oder Katalysator vermischt. Dadurch kann sichergestellt werden, daß eine besonders homogene Verteilung der Komponenten entsteht.

In den Rahmen der vorliegenden Erfindung fällt auch eine Vorrichtung zur Durchführung des erfindungsgemäßen Verfahrens, bei der eine oder mehrere Mischkammern vorgesehen sind, in denen alle Komponenten und Zusätze des Bindemittels miteinander vermischt werden können, wobei einer oder mehrere Funktionsabschnitte, insbesondere eine oder mehrere Mischkammern evakuierbar sind. Die Vorrichtung zur Verarbeitung des mehrkomponentigen Bindemittels kann insbesondere zwei Mischkammern aufweisen, wobei in einer ersten Mischkammer die nanofeine Komponente mit chemisch neutralen Zusätzen vorgemischt und in einer zweiten Mischkammer mit einem Reaktionspartner und/oder einem Reaktionsbeschleuniger oder Katalysator vermischt werden. Damit ergibt sich der bei der oben beschriebenen entsprechenden Verfahrensvariante erzielbare Vorteil, daß die erste Mischkammer in der Regel nicht gereinigt werden muß.

Beide Ausführungsformen von Verarbeitungsvorrichtungen können in einer Weiterbildung in der Mischkammer bzw. den Mischkammern ein Rührwerk oder ein statisches Mischrohr enthalten, wie sie aus dem Stand der Technik an sich bekannt sind. Auch Schnecken- und/oder Kolbenförderung sind möglich.

Alternativ können die Mischkammern aber auch als Wirbelkammern ausgebildet sein, wobei eine Vorrichtung zur Erzeugung eines Druckgradienten innerhalb einer Mischkammer oder zwischen mehreren Mischkammern vorgesehen ist. Wie bei der oben geschilderten entsprechenden Verfahrensvariante erläutert, kann damit eine besonders homogene Mischung der Komponenten erzielt werden.

Bei einer Weiterbildung dieser Verarbeitungsvorrichtung kann die Vorrichtung zur Erzeugung eines Druckgradienten eine oder mehrere Pumpen umfassen, die entweder Unterdruck oder je nach Verfahrensführung auch Überdruck erzeugen können.

Zur Erzeugung eines Druckgradienten kann alternativ aber auch eine Druckluftzuführung zu einer oder mehreren Mischkammern vorgesehen sein, was besonders unaufwendig und preiswert in der Herstellung ist.

Ohne zusätzlichen apparativen Aufwand auf seiten der Vorrichtung kann der Druckgradient aber auch dadurch erzeugt werden, daß eine der Komponenten des Bindemittels in einer Verpackung mit Unterdruck und/oder eine weitere Komponente mit Atmosphärendruck oder Überdruck eingesetzt wird.

Besonders bevorzugt ist eine Ausführungsform der erfindungsgemäßen Vorrichtung, bei der ein oder mehrere Funktionsabschnitte der Vorrichtung, insbesondere eine oder mehrere Mischkammern, zur Steuerung von chemischen Reaktionsabläufen gekühlt und/oder beheizt werden können.

Die erfindungsgemäße Vorrichtung kann sich dadurch auszeichnen, daß eine Lager- und Transportverpackung zur Bevorratung und Aufbewahrung der nanofeinen Komponente bis zur Verarbeitung des Bindemittels vorgesehen ist, die ein integriertes Cuttersystem aufweist, welches die Verpackung zur Entnahme der nanofeinen Komponente selbsttätig öffnen kann.

Die Lager- und Transportverpackung kann bei besonders bevorzugten Ausführungsformen evakuierbar sein. Sie kann alternativ oder zusätzlich auch Kühleinrichtungen enthalten, mit denen insbesondere die nanofeine Komponente des Bindemittels bis zur Verarbeitung unterkühlt gelagert und transportiert werden kann.

Weiterhin ist es vorteilhaft, wenn Vorratsbehälter für weitere Komponenten und/oder Zusatzstoffe des Bindemittels vorgesehen sind, die evakuierbar und/oder kühlbar sind, wodurch unerwünschte Reaktionen dieser weiteren Komponenten ebenfalls verhindert oder zumindest bis zur Verarbeitung hinausgezögert werden können.

Bei der erfindungsgemäßen Vorrichtung kann ein elektrischer bzw. elektromechanischer Antrieb vorgesehen sein.

Alternativ kann aber auch ein, vorzugsweise elektrisch angesteuerter, Druckluftantrieb vorgesehen sein.

Da die Verarbeitungsvorgänge für das erfindungsgemäße mehrkomponentige Bindemittel in der Regel werkstückbezogen und sehr individuell sind, wird die erfindungsgemäße Vorrichtung nur in Ausnahmefällen automatisch arbeiten, sondern normalerweise von Hand betätigbar sein.

Bei einer Weiterbildung dieser Ausführungsform ist zur Applikation des Bindemittels ein Hebelmechanismus nach Art einer für Kleb- und Dichtstoffverarbeitung verwendbaren Spritzpistole vorgesehen. Damit läßt sich das erfindungsgemäße mehrkomponentige Bindemittel bei der Verarbeitung besonders einfach applizieren.

Eine vorteilhafte Weiterbildung sieht vor, daß der Hebelmechanismus eine Dosiereinrichtung umfaßt, mit der die Menge von zuzumessenden Bindemittel beim Bearbeitungsvorgang exakt dosiert werden kann.

Zur Evakuierung von Mischräumen können in der erfindungsgemäßen Vorrichtung ein oder mehrere Handpumpen vorgesehen sein, wie sie üblicherweise im Handel erhältlich sind.

Ganz besonders bevorzugt ist eine Ausführungsform der erfindungsgemäßen Vorrichtung zur Durchführung des erfindungsgemäßen Verfahrens, die transportabel, insbesondere tragbar gestaltet ist, so daß sie vor Ort und an wechselnden Einsatzorten, beispielsweise Baustellen, ohne weiteres verwendet werden kann.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand von Ausführungsbeispielen näher erläutert. Es zeigen:
- Fig. 1: eine Schemadarstellung einer besonders einfachen Ausführungsform der erfindungsgemäßen Vorrichtung mit einer einzigen Mischkammer;
- Fig. 2: eine Ausführungsform mit zwei hintereinandergeschalteten Mischkammern; und
- Fig. 3: eine zum Handbetrieb geeignete tragbare Ausführungsform der erfindungsgemäßen Vorrichtung.

Zur Anwendung gelangt eine von Hand oder maschinell betriebene Komponenten-Mischvorrichtung mit Schneckenmischer, statischem Mischrohr oder anderem Mischsystem und angeschlossener, beliebig geformter Auftragsdüse, womit üblicherweise Kunststoffe und organische Klebstoffe verarbeitet werden.

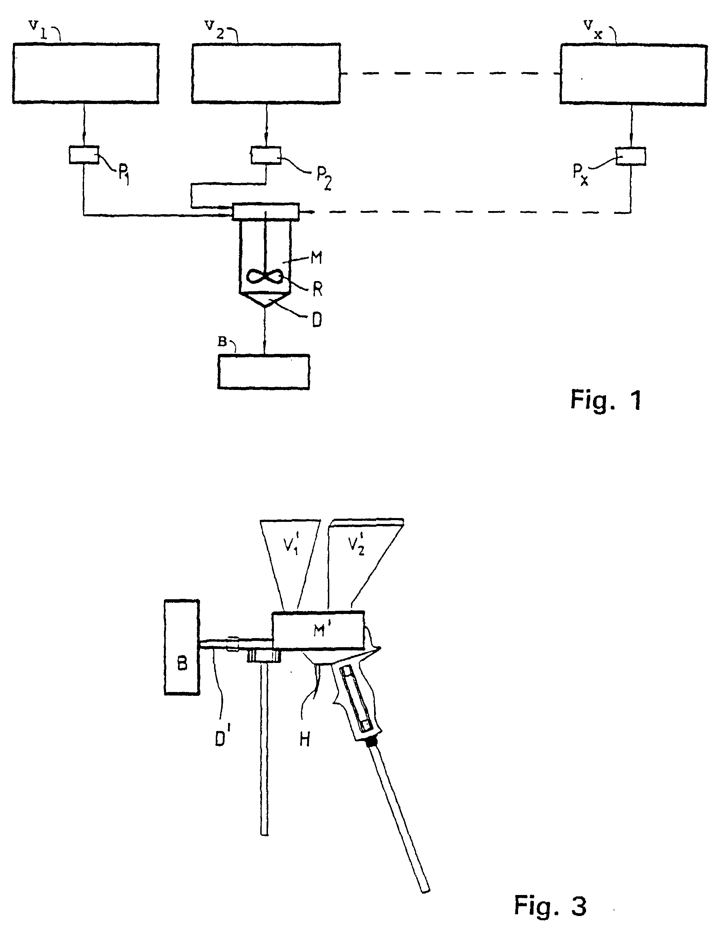

Bei einer einfachen Ausführung gemäß Fig. 1 wird im Gegensatz zu bekannten Verfahren aus mindestens einem Vorratsbehälter V₁ ein mikro- bis nanofein strukturierter Stoff in eine Mischkammer M eingeführt. Der Reaktionspartner wird aus einem zweiten Vorratsbehälter V₂ zugeführt. Eine weitere Besonderheit liegt darin, daß zumindest der mikro- bis nanofeine Stoff vakuumverpackt und bei Bedarf zusätzlich unterkühlt in das System eingebracht und bei niedrigen Temperaturen bevorratet wird um zu verhindern, daß vorzeitig unerwünschte Reaktionen und Zusammenklumpungen stattfinden. Der mikro- bis nanofeine Stoff kann pulverig, flüssig oder gasförmig sein, bzw. sich in einem Trägermedium befinden. Die Verpackungen werden zum Zeitpunkt der Verwendung durch in die Vorratsbehälter V₁ und ggf. V₂ integrierte Cutter-Systeme, die in der Zeichnung nicht eigens dargestellt sind, geöffnet. Der Inhalt der Vorratsbehälter wird sodann mit Druckluft, Förderpumpen P₁ bis Pₓ, peristaltischen Förderern o.a. Fördermethoden in die Mischkammer M eingebracht, wo die chemische Reaktion entweder von selbst einsetzt oder z.B. durch Energiezufuhr eingeleitet wird. Innerhalb der Topfzeit wird die Mischung, wie in Fig. 1 angedeutet, mit einer Düse D, oder bei anderen, nicht dargestellten Ausführungsformen mit Walzen oder Förderschnecken im Punkt-, Linien- oder Flächenauftrag an einem Bauteil B weiterverarbeitet.

Die Mischkammer M kann ein Rührwerk R oder ein statisches Mischrohr aufweisen und bei Bedarf ebenso evakuiert und unterkühlt werden, um unerwünschte vorzeitige Reaktionen zu verhindern. Beliebige Funktionsabschnitte des gesamten Systems können jedoch auch zu Steuerzwecken beheizt oder gekühlt werden.

Es können noch weitere Vorratsbehälter V₃...Vₓ vorgesehen sein, die weitere Komponenten, insbesondere verschiedene metallische oder nichtmetallische Stoffe beliebiger Aggregatzustände und grober bis nanofeiner Strukturierung als Reaktionspartner, Rißstop-, Flexibilisierungs- und Dichtzusätze enthalten. Auch sie können vakuumverpackt und gekühlt bis zur Verarbeitung gelagert werden.

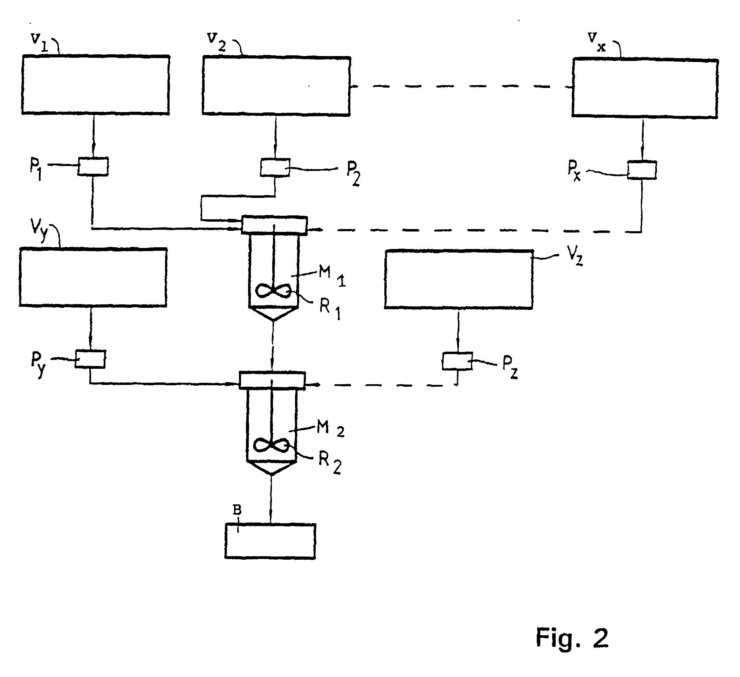

Eine andere maschinelle Ausführung gemäß Fig. 2 enthält mindestens eine weitere Mischkammer M₂ mit Rührwerk R₂, in die die aus der Mischkammer M₁ kommenden, mittels Rührwerk R₁ vorgemischten, aber chemisch noch nicht reagierenden Komponenten eingebracht werden, um erst dort mit dem eigentlichen Reaktionspartner, z.B. einem Härter aus einem Vorratsbehälter V_{y} und anderen Komponenten aus einem Vorratsbehälter V_{z}, die jeweils von Pumpen P_{y} bzw. P_{z} gefördert werden, endvermischt und damit zur Reaktion gebracht zu werden. Damit wird sichergestellt, daß in der ersten Mischkammer M₁ ohne Beeinflussung durch den Reaktionspartner eine homogene Mischung aus den mikro- bis nanofeinen Komponenten und weiteren Zusätzen erzeugt werden kann.

Die Mischung kann auch dadurch erfolgen, daß eine stoffliche Komponente aus einem nicht evakuierten Behältnis in die evakuierte Mischkammer M₁ strömt und dort die andere Komponente beim Druckausgleich so durchsetzt, daß eine homogene Verteilung entsteht. Bei diesem Mischprinzip ist wegen der Entbehrlichkeit von beweglichen Mischelementen wie Schnecken, Quirl, Schaufeln etc. die Abdichtung der Kammer für den Aufbau des benötigten Vakuums leichter erreichbar. Diese bauteil- und gewichtsparende Ausführung eignet sich auch für transportable Vorrichtungen.

Wenn die Mischkammer M₁ in einer Weise mit geeigneten stofflichen Komponenten beschickt wird, daß es hier nur zu einer vollkommen reaktionsfreien, rein physikalischen Vormischung kommt, so entstehen noch keine klebrigen Rückstände und die bei anderen Ausführungen nach abgeschlossenem Arbeitsvorgang erforderliche Reinigung kann entfallen. Somit muß hier nur die Mischkammer M₂, in der die Reaktion abläuft, zwischendurch mit den üblichen Mitteln gereinigt werden.

Auch bei dieser maschinellen Ausführung können alle Funktionsabschnitte nach Bedarf evakuiert, gekühlt und beheizt werden.

Bei von Hand betriebenen Vorrichtungen tritt anstelle des maschinellen Antriebssystems ein Hebelmechanismus H nach Art der für die Kleb- und Dichtstoffverarbeitung üblicherweise verwendeten Spritzpistolen mit einer Düse D'. Die Evakuierung des Systems, insbesondere der Mischkammer M', kann durch Handpumpen erzielt werden. Heizung und Unterkühlung kann hier nur durch elektrischen Betrieb erfolgen. Statt eines elektrischen Steuersystems kann hierbei ein von Hand betriebener Hebeldosiermechanismus verwendet werden.

Im Prinzip wird dabei die Verarbeitung gemäß Fig. 1 in einer tragbaren Vorrichtung gemäß Fig. 3 durchgeführt.

Die Gebinde V₁', V₂' mit den stofflichen Komponenten können bis zum Zeitpunkt der Verwendung in extra Kühlbehältern gelagert werden.

Für den Betrieb an Baustellen kommt auch ein Druckluftantrieb infrage, dessen Steuerung wie beim Handantrieb oder elektrisch erfolgen kann.

## Patentansprüche

1. Verfahren zur Verarbeitung eines mehrkomponentigen Bindemittels, bei dem mindestens eine Komponente vor der Verarbeitung in nanofeiner Form mit mittlerer Partikelgröße < 1 µm, vorliegt,
**dadurch gekennzeichnet,**
**daß** die nanofeine Komponente bis zur Verarbeitung des Bindemittels in einer Vakuumverpackung (V₁; V₁') bevorratet gehalten und erst unmittelbar bei der Verarbeitung des Bindemittels aus der Vakuumverpackung (V₁; V₁') entnommen wird.

2. Verfahren nach Anspruch 1, **dadurch gekennzeichnet, daß** eine Vakuumverpackung (V₁; V₁') verwendet wird, die für einen großen Bereich des elektromagnetischen Spektrums, insbesondere im Bereich des sichtbaren Lichts und der UV-Strahlung, abschirmend wirkt.

3. Verfahren zur Verarbeitung eines mehrkomponentigen Bindemittels nach einem der vorhergehenden Ansprüche, **dadurch gekennzeichnet, daß** die nanofeine Komponente bis zur Verarbeitung des Bindemittels in einem Trägermedium eingebettet bevorratet gehalten und erst unmittelbar bei der Verarbeitung des Bindemittels vom Trägermedium getrennt wird.

4. Verfahren zur Verarbeitung eines mehrkomponentigen Bindemittels nach einem der vorhergehenden Ansprüche, **dadurch gekennzeichnet, daß** die nanofeine Komponente bis zur Verarbeitung des Bindemittels in einem Temperaturbereich ≤ 10°C gehalten wird.

5. Verfahren zur Verarbeitung eines mehrkomponentigen Bindemittels nach einem der vorhergehenden Ansprüche, **dadurch gekennzeichnet, daß** die nanofeine Komponente zunächst mit chemisch nicht mit der nanofeinen Komponente reagierenden Zusätzen und erst danach mit einem Reaktionspartner und/oder einem Reaktionsbeschleuniger oder Katalysator vermischt wind.

6. Vorrichtung zur Durchführung des Verfahrens nach einem der vorhergehenden Ansprüche, **dadurch gekennzeichnet, daß** eine einzige Mischkammer (M; M') vorgesehen ist, in der alle Komponenten und Zusätze des Bindemittels miteinander vermischt werden können.

7. Vorrichtung zur Durchführung des Verfahrens nach einem der Ansprüche 1 bis 5, **dadurch gekennzeichnet, daß** mindestens zwei Mischkammern (M₁, M₂) vorgesehen sind, wobei in einer ersten Mischkammer (M₁) die nanofeine Komponente mit chemisch neutralen Zusätzen vorgemischt und in einer zweiten Mischkammer (M₂) mit einem Reaktionspartner und/oder einem Reaktionsbeschleuniger oder Katalysator vermischt werden kann.

8. Vorrichtung nach Anspruch 6 oder 7, **dadurch gekennzeichnet, daß** die Mischkammer (M; M') bzw. die Mischkammern (M₁, M₂) als Wirbelkammern ausgebildet sind, und daß eine Vorrichtung zur Erzeugung eines Druckgradienten innerhalb einer Mischkammer oder zwischen mehreren Mischkammern vorgesehen ist.

9. Vorrichtung nach einem der Ansprüche 6 bis 8, **dadurch gekennzeichnet, daß** ein oder mehrere Funktionsabschnitte der Vorrichtung, insbesondere eine oder mehrere Mischkammern (M; M₁, M₂; M'), zur Steuerung von chemischen Reaktionsabläufen gekühlt und/oder beheizt werden können.

10. Vorrichtung nach einem der Ansprüche 6 bis 9, **dadurch gekennzeichnet, daß** ein oder mehrere Funktionsabschnitte der Vorrichtung, insbesondere eine oder mehrere Mischkammern (M; M₁, M₂; M') evakuierbar sind.

11. Vorrichtung zur Durchführung des Verfahrens nach einem der vorhergehenden Ansprüche, **dadurch gekennzeichnet, daß** eine Lager- und Transportverpackung zur Bevorratung und Aufbewahrung der nanofeinen Komponente bis zur Verarbeitung des Bindemittels vorgesehen ist, die ein integriertes Cuttersystem aufweist, welches die Verpakkung (V₁; V₁') zur Entnahme der nanofeinen Komponente selbsttätig öffnen kann.

12. Vorrichtung nach einem der Ansprüche 6 bis 11, **dadurch gekennzeichnet, daß** zur Applikation des Bindemittels ein Hebelmechanismus (H) nach Art einer für Kleb- und Dichtstoffverarbeitung verwendbaren Spritzpistole vorgesehen ist.

13. Vorrichtung nach Anspruch 12, **dadurch gekennzeichnet, daß** der Hebelmechanismus eine Dosiereinrichtung umfaßt.

14. Vorrichtung nach einem der Ansprüche 6 bis 13, **dadurch gekennzeichnet, daß** zur Evakuierung von Mischräumen (M') in der Vorrichtung eine oder mehrere Handpumpen vorgesehen sind.

## Claims

1. Method for processing a multiple-component binder, wherein at least one component is present in nano-fine size with an average particle size of < 1µm before processing, **characterized in that** the nano-fine component is stored in a vacuum package (V₁; V₁') until processing of the binder and is removed from the vacuum package (V₁; V₁') only immediately before processing of the binder.

2. Method according to claim 1, **characterized in that** a vacuum package (V₁; V₁') is used which shields a large range of the electromagnetic spectrum, in particular in the range of visible light and UV radiation.

3. Method for processing a multiple-component binder according to any one of the preceding claims, **characterized in that** the nano-fine component is stored, embedded in a carrier medium, until processing of the binder, and is separated from the carrier medium only immediately before processing of the binder.

4. Method for processing a multiple-component binder according to any one of the preceding claims, **characterized in that** the nano-fine component is kept at a temperature range of ≤ 10°C until processing of the binder.

5. Method for processing a multiple-component binder according to any one of the preceding claims, **characterized in that** the nano-fine component is firstly mixed with admixtures which do not chemically react with the nano-fine component and is mixed only later with a reacting agent and/or an inductor or catalyst.

6. Device for carrying out the method according to any one of the preceding claims, **characterized in that** one single mixing chamber (M;M') is provided in which all components and admixtures of the binder can be mixed together.

7. Device for carrying out the method according to any one of the claims 1 through 5, **characterized in that** at least two mixing chambers (M₁, M₂) are provided wherein in a first mixing chamber (M₁) the nano-fine component is premixed with chemically neutral admixtures and can be mixed with a reacting agent and/or inductor or catalyst in a second mixing chamber (M₂).

8. Device according to claim 6 or 7, **characterized in that** the mixing chamber (M;M') or the mixing chambers (M₁, M₂) are formed as whirl chambers and a device for generating a pressure gradient is provided within a mixing chamber or between several mixing chambers.

9. Device according to any one of the claims 6 through 8, **characterized in that** one or more functional sections of the device, in particular one or more mixing chambers (M; M₁, M₂; M') can be cooled and/or heated for controlling chemical reaction processes.

10. Device according to any one of the claims 6 through 9, **characterized in that** one or more functional sections of the device, in particular one or more mixing chambers (M; M₁, M₂; M') can be evacuated.

11. Device for carrying out the method according to any one of the preceding claims, **characterized in that** a storing and transport packing is provided for storing and keeping the nano-fine component until processing of the binder, which comprises an integrated cutter system which can automatically open the package (V₁; V₁') for removing the nano-fine component.

12. Device according to any one of the claims 6 through 11, **characterized in that** a lever mechanism (H) of the type of an injection pistol which can be used for glue and sealing agent processing is provided for application of the binder.

13. Device according to claim 12, **characterized in that** the lever mechanism comprises a dosing means.

14. Device according to any one of the claims 6 through 13, **characterized in that** one or more manual pumps are provided for evacuating mixing spaces (M') in the device.

## Revendications

1. Procédé de mise en oeuvre d'un liant à plusieurs composants dans lequel au moins un composant est présent avant la mise en oeuvre sous forme nanofine avec une taille de particule moyenne < 1 µm, **caractérisé en ce que** le composant nanofin est maintenu stocké dans un emballage sous vide (V₁ ; V_{1'}) jusqu'à la mise en oeuvre du liant et n'est retiré de l'emballage sous vide (V₁ ; V_{1'}) que lors de la mise en oeuvre du liant.

2. Procédé selon la revendication 1, **caractérisé en ce que** l'on utilise un emballage sous vide (V₁ ; V_{1'}) qui a un effet de masquage pour un grand domaine du spectre électromagnétique, en particulier dans le domaine de la lumière visible et du rayonnement UV.

3. Procédé de mise en oeuvre d'un liant à plusieurs composants selon Tune des revendications précédentes, **caractérisé en ce que** le composant nanofin est maintenu stocké inclus dans un milieu de support jusqu'à la mise en oeuvre du liant et n'est séparé du milieu de support que lors de la mise en oeuvre du liant.

4. Procédé de mise en oeuvre d'un liant à plusieurs composants selon l'une des revendications précédentes, **caractérisé en ce que** le composant nanofin est maintenu dans un domaine de température ≤ 10°C jusqu'à la mise en oeuvre du liant.

5. Procédé de mise en oeuvre d'un liant à plusieurs composants selon l'une des revendications précédentes, **caractérisé en ce que** le composant nanofin est mélangé d'abord avec des additifs qui ne réagissent pas chimiquement avec le composant nanofin et n'est mélangé qu'ensuite avec un partenaire de réaction et/ou un accélérateur de réaction ou un catalyseur.

6. Dispositif pour la mise en oeuvre du procédé selon l'une des revendications précédentes, **caractérisé en ce qu'**il est prévu une seule chambre de mélange (M ; M') dans laquelle tous les composants et additifs du liant peuvent être mélangés entre eux.

7. Dispositif pour la mise en oeuvre du procédé selon Tune des revendications 1 à 5, **caractérisé en ce qu'**il est prévu au moins deux chambres de mélange (M₁, M₂) où, dans une première chambre de mélange (M₁), le composant nanofin peut être prémélangé avec des additifs chimiquement neutres et dans une deuxième chambre de mélange (M₂) il peut être mélangé avec un partenaire de réaction et/ou un accélérateur de réaction ou un catalyseur.

8. Dispositif selon la revendication 6 ou 7, **caractérisé en ce que** la chambre de mélange (M ; M') ou les chambres de mélange (M₁, M₂) sont sous forme de chambres de fluidisation et **en ce qu'**il est prévu un dispositif pour produire un gradient de pression à l'intérieur d'une chambre de mélange ou entre plusieurs chambres de mélange.

9. Dispositif selon l'une des revendications 6 à 8, **caractérisé en ce qu'**une ou plusieurs sections fonctionnelles du dispositif, en particulier une ou plusieurs chambres de mélange (M ; M₁, M₂ ; M'), peuvent être refroidies et/ou chauffées pour commander les déroulements de réactions chimiques.

10. Dispositif selon l'une des revendications 6 à 9, **caractérisé en ce qu'**une ou plusieurs sections fonctionnelles du dispositif, en particulier une ou plusieurs chambres de mélange (M ; M₁, M₂ ; M'), peuvent être mises sous vide.

11. Dispositif pour la mise en oeuvre du procédé selon l'une des revendications précédentes, **caractérisé en ce qu'**il est prévu un emballage de stockage et de transport pour le stockage et la conservation du composant nanofin jusqu'à la mise en oeuvre du liant, qui comporte un système de cutter intégré qui peut ouvrir automatiquement l'emballage (V₁ ; V_{1'}) pour le prélèvement du composant nanofin.

12. Dispositif selon l'une des revendications 6 à 11, **caractérisé en ce que**, pour l'application du liant, il est prévu un mécanisme de levier (H) du type d'un pistolet de pulvérisation utilisable pour la mise en oeuvre des colles et des épaississants.

13. Dispositif selon la revendication 12, **caractérisé en ce que** le mécanisme de levier comprend un dispositif doseur.

14. Dispositif selon l'une des revendications 6 à 13, **caractérisé en ce qu'**il est prévu une ou plusieurs pompes à main pour la mise sous vide d'espaces de mélange (M') dans le dispositif.
